# EUROPÄISCHE PATENTSCHRIFT

(11) **EP 2 608 943 B1**
(45) Veröffentlichungstag und Bekanntmachung des Hinweises auf die Patenterteilung: **04.03.2015**
(21) Anmeldenummer: 11749809.7
(22) Anmeldetag: 24.08.2011
(51) Int. Cl.: B29C 45/04, B29C 45/17

(54) **WENDEPLATTEN-SPRITZGIESSMASCHINE MIT DEZENTRALEM STEUERUNGS- UND REGELGERÄT**
TURNING PLATE INJECTION MOLDING MACHINE COMPRISING A DECENTRALIZED CONTROL DEVICE
MACHINE DE MOULAGE PAR INJECTION A PLAQUES REVERSIBLES MUNIE D'UN APPAREIL DE COMMANDE ET DE REGULATION DÉCENTRALISE

(30) Priorität: 25.08.2010 DE 102010035409
(43) Veröffentlichungstag der Anmeldung: 03.07.2013
(73) Patentinhaber: KraussMaffei Technologies GmbH, 80997 München (DE)
(72) Erfinder: ARLT, Manfred, 86567 Hilgertshausen (DE)
(74) Vertreter: Wilhelm, Ludwig
(86) Internationale Anmeldenummer: PCT/EP2011/064524
(87) Internationale Veröffentlichungsnummer: WO 2012/025556

(56) Entgegenhaltungen:
- EP-A1- 1 226 916
- WO-A1-02/04186
- DE-A1-102004 052 499
- DE-U1- 20 308 880

## Beschreibung

Die Erfindung betrifft eine Spritzgießmaschine gemäß dem Oberbegriff von Anspruch 1.

Derartige Spritzgießmaschinen sind in verschiedenen Ausführungsformen aus dem Stand der Technik bekannt, wobei zwischen den äußeren Formaufspannplatten ein oder mehrere drehbare Formenträger vorgesehen sind (DE102005016239A1, EP1155802B2, WO2005/077637A1, WO02/04186A1, EP1226916A1). Bei den bekannten Spritzgießmaschinen ist jedem der drehbaren Formenträger ein Drehverteiler zugeordnet, über den die Formen mit Medien wie zum Beispiel Wasser, Hydrauliköl, oder elektrischer Energie versorgt werden können. Gegebenenfalls können zwei einander gegenüberliegende Drehverteiler an einem Formenträger vorgesehen werden. Des Weiteren kann über geeignete Schnittstellen ein Signal- oder Datenaustausch zwischen Sensoren und Aktoren an oder in dem Formenträger oder an oder in den Formhälften einerseits und der zentralen Steuerungseinrichtung der Spritzgießmaschine andererseits erfolgen. Je nach Komplexität des Formenträgers bzw. der Formhälften kann eine Vielzahl von Aktoren und Sensoren vorhanden sein. In diesem Fall ist eine aufwändige Verdrahtung von den Formhälften über den Drehverteiler zu der zentralen Steuerungseinrichtung erforderlich. Dadurch erhöht sich die Gefahr eines Kabelbruchs. Außerdem kann es zu Messwertverfälschungen kommen.

Darüber hinaus sind Spritzgießmaschinen bekannt, bei denen Bussysteme zur Übertragung von Daten und Signalen eingesetzt werden (DE19958790C2, DE10302878B4).

Ausgehend von dem eingangs genannten Stand der Technik liegt der Erfindung die Aufgabe zugrunde, eine Spritzgießmaschine der gattungsgemäßen Art dahingehend weiterzuentwickeln, dass sie speziell für den Einsatz von komplexen Formenwerkzeugen mit Formhälften geeignet ist, die mit einer Vielzahl von Sensoren und Aktoren ausgestattet sind.

Die Lösung dieser Aufgabe erfolgt durch eine Spritzgießmaschine mit den Merkmalen von Anspruch 1. Vorteilhafte Weiterentwicklungen und Ausgestaltungen finden sich in den Unteransprüchen.

Dadurch, dass ein mit dem Formenträger und/oder mit den auf dem Formenträger anbringbaren Formen bzw. Formhälften koppelbarer und beim Betrieb der Spritzgießmaschine mit dem Formenträger mitdrehender Schaltschrank vorgesehen ist, in dem Steuerungs- und Reglerkarten zur Verarbeitung von Signalen von Sensoren und/oder Aktoren sowie zur Abgabe von Signalen an die Sensoren und/oder die Aktoren vorgesehen sind, und dass wenigstens eine Busverbindung von dem mitdrehendem Schaltschrank zu der zentralen Steuerungseinrichtung der Spritzgießmaschine vorgesehen ist, über den ein Datenaustausch zwischen der zentralen Steuerungseinrichtung der Spritzgießmaschine und den Steuerungs- und Reglerkarten in dem mitdrehendem Schaltschrank vorgesehen ist, wird der Verdrahtungsaufwand signifikant reduziert. Die Verarbeitung der Signale erfolgt dezentral direkt an dem Formenträger in dem mitdrehenden Schaltschrank bzw. in den darin untergebrachten Steuerungs- und Reglerkarten. Daraus folgt auch eine bessere Regelqualität aufgrund verkürzter Signalübertragungswege bzw. verkürzter Datenübertragungswege und reduzierter Übergabeschnittstellen und es können geringere Messwert-Toleranzen vorgegeben werden. In Abhängigkeit des Ausrüstungsumfangs der Spritzgießmaschine, insbesondere in Abhängigkeit vom Ausrüstungsumfang der Formwerkzeuge, kann es auch zu einer signifikanten Reduzierung der Kosten kommen.

In weiterer Ausgestaltung der erfindungsgemäßen, dezentralen Steuerungs- und Regelungstechnik kann vorgesehen werden, dass in dem mitdrehenden Schaltschrank weitere elektrische und/oder elektronische Elemente für den Betrieb der Formen bzw. der Formhälften und/oder des Formenträgers untergebracht sind. Hierbei kann es sich beispielsweise um Ein- und Ausgabekarten für digitale und/oder analoge Ein-/Ausgänge handeln. Ferner können elektrische Stellelemente zur Betätigung von Ventilen, Kernzügen oder dergleichen vorgesehen sein. Darüber hinaus können in dem mitdrehenden Schaltschrank geregelte und/oder ungeregelte Netzteile und/oder Absicherungen für Versorgungs- und Signalspannungen vorgesehen sein.

Die Austausch von elektrischer Energie (Versorgungsspannungen, Signalspannungen) und/oder von elektrischen Signalen bzw. von Daten kann bevorzugt über eine manuelle und/oder automatische Multikupplung mit einer Mehrzahl von Kupplungsschnittstellen erfolgen, wobei an dem Formenträger und/oder an den auf dem Formenträger befestigten Formhälften solche Kupplungsschnittstellen vorgesehen sind, die im Eingriff mit den Kupplungsstellen der Multikupplung an dem Schaltschrank gebracht werden können.

Für die Versorgung der elektrischen Verbraucher der Spritzgießmaschine ist üblicherweise ein zentraler Versorgungsschaltschrank vorhanden, der mit einer Spannungsquelle verbunden ist. Daher können die in den rotierenden Formhälften oder auf dem rotierenden Formträger vorhandenen elektrischen Verbraucher von diesem zentralen Versorgungsschaltschrank mit elektrischer Energie versorgt werden. Hierzu kann die von der Spannungsquelle (V) zur Verfügung gestellte elektrische Spannung bzw. Energie in dem zentralen Versorgungsschaltschrank gegebenenfalls aufbereitet und über eine oder mehrere Versorgungsleitungen zu dem Drehverteiler geführt werden. Die Versorgungsspannungen können über Hochleistungsschleifringe des Drehverteilers in den drehbaren Teils des Drehverteilers und von dort weiter in den mitdrehenden Schaltschrank geführt werden. Von dort aus kann eine Unterverteilung an die Verbraucher in den Formhälften und/oder auf dem Formträger erfolgen.

Für den Datenaustausch zwischen dem zentralen Schaltschrank bzw. den Steuerungs- und Reglerkarten darin und der zentralen Steuerungseinrichtung können eine oder mehrere Busverbindungen vorgesehen sein, welche mittels Schleifring über den Drehverteiler oder kabellos, beispielsweise über Funk oder Bluetooth, ausgebildet sein können.

Vorteilhaft können ein oder mehrere Linearantriebe vorgesehen sein, mit denen der Schaltschrank auf den mittleren Formträger zu und von diesem weg verfahren werden kann. Dies ist insbesondere dann von Vorteil, wenn der Drehverteiler an einer Traverse zwischen den Säulen der Spritzgießmaschine angebracht wird. Der Schaltschrank kann dann in der Betriebsstellung, wenn er mit den Formhälften gekoppelt ist, unter der Traverse hindurch bewegt werden. In einer zurückgezogenen Stellung können Wartungs- und Installationsarbeiten vorgenommen werden, weshalb man auch von einer Wartungsstellung sprechen kann.

Je nach Ausführung der Spritzgießmaschine können mehrere drehbare Formenträger zwischen den äußeren Formaufspannplatten vorgesehen sein. In diesem Fall ist für jeden drehbaren Formenträger ein mitdrehender Schaltschrank und ein Drehverteiler vorgesehen. Die zentrale Steuerungseinrichtung ist mit den mehreren Schaltschränken über eine oder mehrere Busverbindungen und die Drehverteiler verbunden.

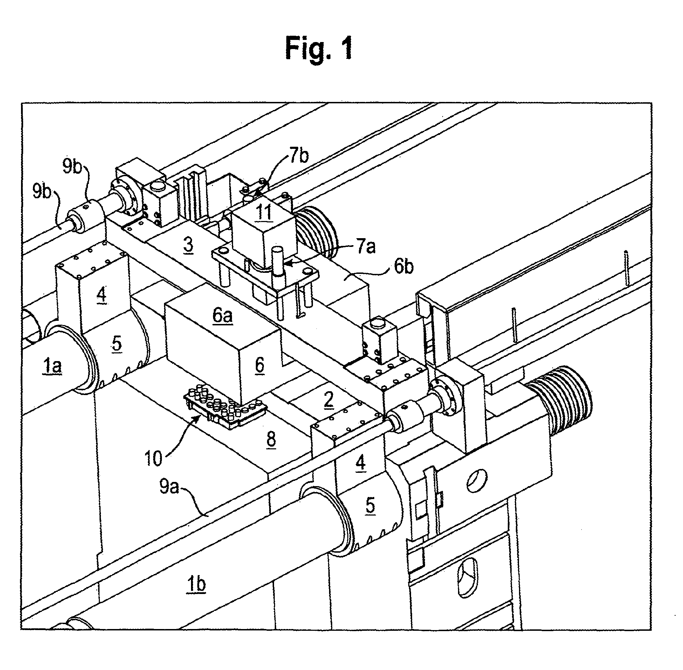

Nachfolgend soll die Erfindung anhand eines Ausführungsbeispiels und unter Bezugnahme auf die Figuren 1 - 6 näher beschrieben werden.

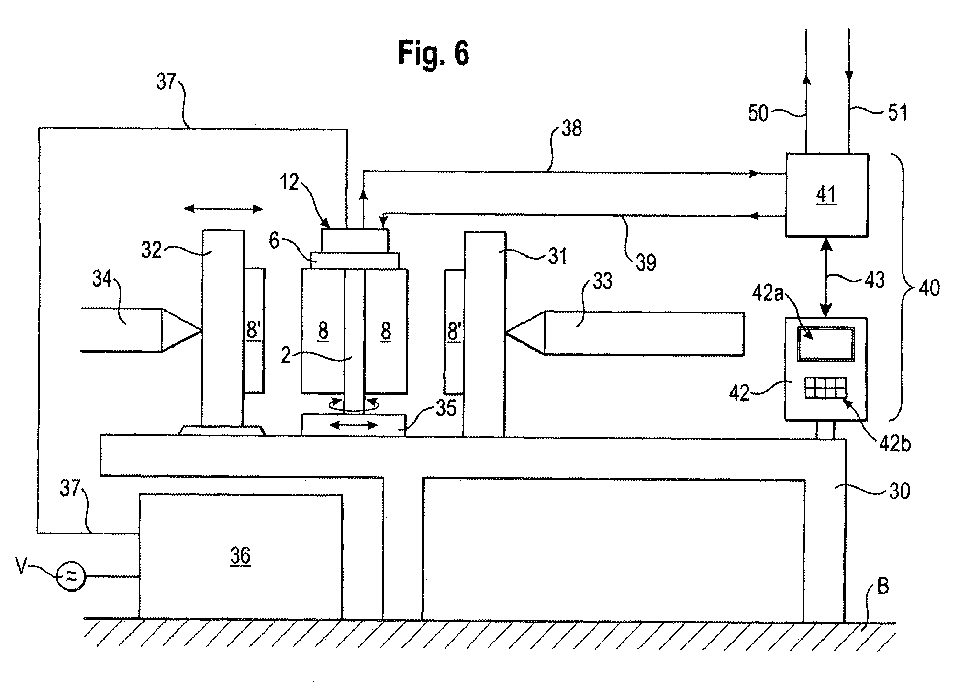

Die Figur 1 zeigt schematisch einen Ausschnitt aus einer an sich bekannten Wendeplatten-Spritzgießmaschine mit zwei äußeren Formaufspannplatten und einem mittleren drehbaren Formenträger, wie sie beispielsweise in der DE102005016239A1 beschrieben und in der Figur 6 der vorliegenden Anmeldung schematisch dargestellt ist. Zwischen den in der Figur 1 nicht sichtbaren äußeren Formaufspannplatten verlaufen vier Säulen zur Aufnahme bzw. Übertragung der Schließkraft, von denen nur die beiden oberen Säulen 1 a und 1 b zum Teil gezeigt sind. Ein mittlerer Formenträger 2 ist auf einem auf dem Maschinenbett drehbar gelagerten Drehteller befestigt, wie dies beispielsweise in der vorgenannten

DE102005016239A1 gezeigt und beschrieben ist (siehe hierzu auch Figur 6). Der mittlere Formenträger 2 ist vorliegend als sogenannte Wendeplatte 2 mit zwei Formaufspannflächen zur Befestigung von Formen bzw. Formhälften ausgeführt. Er kann aber auch würfelförmig oder prismatisch mit mehr als zwei Formaufspannflächen ausgebildet sein. Zu beiden Seiten der Wendeplatte 2 sind Formhälften angebracht, von denen in der Figur 1 nur die vordere Formhälfte 8 sichtbar ist. Diese Formhälften können im Betrieb mit passenden Formhälften an den äußeren Formaufspannplatten zusammengebracht werden, um geeignete Kavitäten für Kunststoffformteile zu bilden. Oberhalb der Wendeplatte 2 ist zwischen den Säulen 1 a und 1 b eine Traverse 3 angeordnet, deren Enden jeweils über ein Zwischenstück 4 auf Gleitbuchsen 5 befestigt ist. Die Traverse 3 kann mittels geeigneter Linearantriebe 9a, 9b entlang den Säulen 1 a und 1 b verfahren werden. Ein Schaltschrank 6, umfassend einen vorderen Schaltschrankteil 6a und einen hinteren Schaltschrankteil 6b, kann mittels zweier Linearantriebe 7a und 7b aus der in der Figur 1 gezeigten oberen Stellung (Wartungsstellung) nach unten in eine Betriebsstellung und wieder zurück verfahren werden. In der Betriebsstellung ist eine an der Unterseite des Schaltschranks 6 vorhandene automatische Multikupplung mit einer passenden automatischen Multikupplung 10 an der Formhälfte 8 im Eingriff bzw. eingekuppelt. Des Weiteren ist der Schaltschrank 6 in der Betriebsstellung soweit abgesenkt, dass er sich frei unter der Traverse 3 hindurch bewegen kann. Bei Drehung der Wendeplatte 2 wird der Schaltschrank 6 mitgedreht. Oberhalb der Traverse befindet sich der drehfeste äußere Teil eines Drehverteilers in einem Gehäuse 11, während das innere drehbare Teil des Drehverteilers nach unten aus dem äußeren Teil bzw. dem Gehäuse 11 herausragt und Anschlüsse aufweist, von denen elektrische Leitungen zu und in den Schaltschrank 6 verlaufen. Nicht dargestellt sind die Verbindungsleitungen zwischen dem drehfesten Teil des Drehverteilers einerseits und der zentralen Steuerungseinrichtung für die Datenübertragung und einem weiteren Schaltschrank, nämlich einem zentralen Versorgungsschaltschrank für die zentrale Spannungsversorgung bzw. Versorgung mit elektrischer Energie.

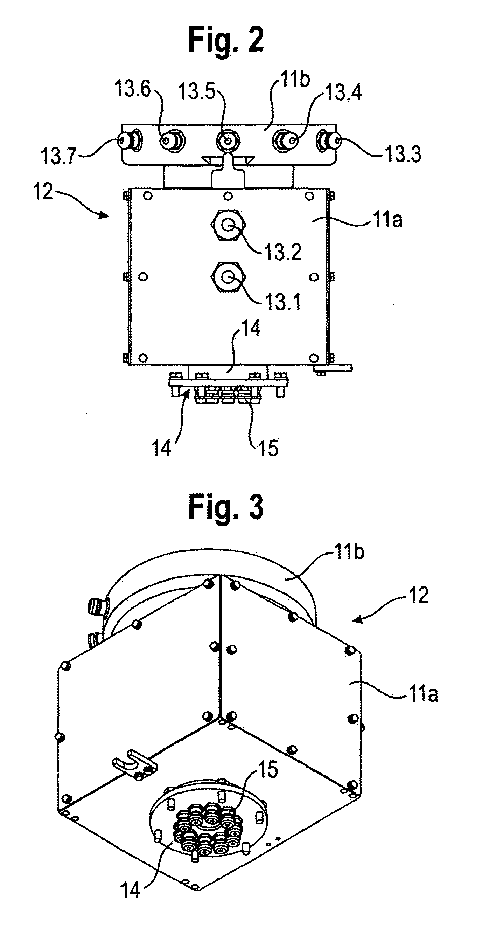

Weitere Einzelheiten zu dem Schaltschrank und dem Drehverteiler sollen nachfolgend anhand der Figuren 2 bis 5 dargelegt werden. Der elektrische Drehverteiler 12 ist in der Figur 2 in einer Seitenansicht und in der Figur 3 perspektivisch dargestellt und zwar von schräg unten. Das Gehäuse 11 weist ein unteres würfelförmiges Gehäuseteil 11a und ein oberes zylindrisches Gehäuseteil 11 b auf. Es sind mehrere Anschlüsse 13.1 - 13.7 vorhanden, an die Kabel für den gewünschten Verwendungszweck angeschlossen werden können. Eine Belegung könnte beispielsweise wie folgt aussehen:
13.1 = Versorgungsspannung 400V
13.2 = Signalspannung 24 V
13.3 = erstes Varankabel (erster Varanbus)
13.4 = zweites Varankabel (zweiter Varanbus)
13.5 = erster CAN-Bus
13.6 = zweiter CAN-Bus
13.7 = Reserve für zukünftige Anwendungen

Mittels Schleifringübertrager können elektrische Verbindungen zwischen dem hier nicht sichtbaren drehfesten Teil des elektrischen Drehverteilers 12 und dessen drehbarem Teil 14 hergestellt werden. Der drehbare Teil 14 ist auf der Unterseite ein Stück aus dem Gehäuse 11 herausgeführt und weist mehrere Anschlüsse 15 auf, von denen Kabel bzw. Leitungen zur Übertragung von elektrischer Energie bzw. einer Versorgungsspannung oder einer Signalspannung sowie zur Übertragung von Daten bzw. Signalen zu dem Schaltschrank 6 verlaufen.

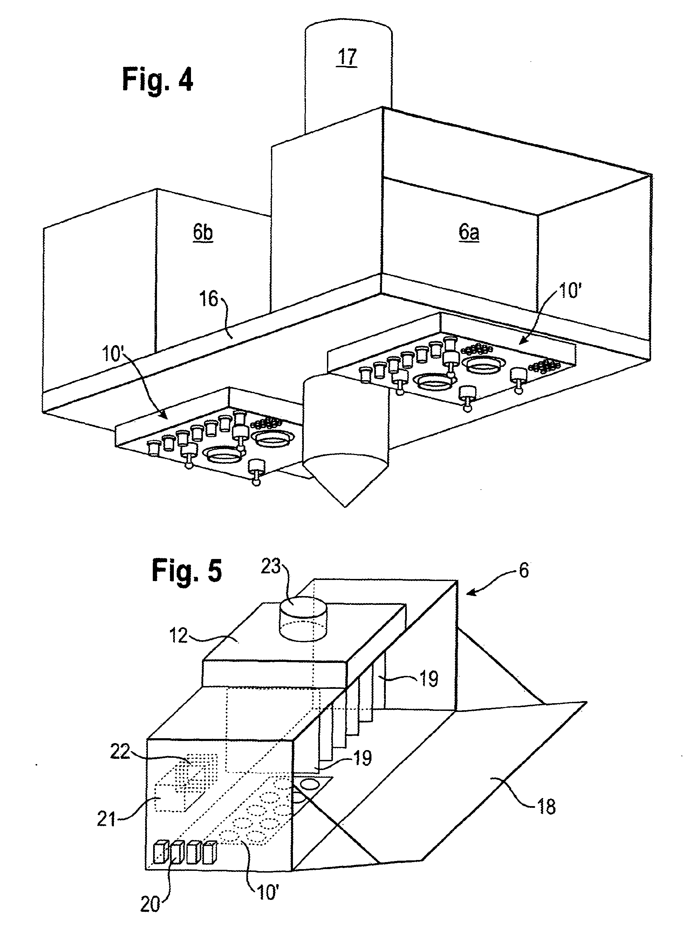

Die Figur 4 zeigt eine perspektivische Darstellung des Schaltschranks 6 aus der Figur 1 und zwar von schräg unten und bei abgenommener Gehäusewand, so dass man in das Innere zumindest des rechten, vorderen Teils des Schaltschranks 6 hineinsehen kann. Der Schaltschrank 6 kann also in ein erstes vorderes Schaltschrankteil 6a und ein zweites hinteres Schaltschrankteil 6b aufgeteilt sein. Jedes dieser Teile 6a, 6b ist einer Formhälfte 8 zugeordnet. Man kann auch sagen, dass zwei Schaltschränke 6a und 6b vorgesehen sind, die über eine Tragplatte 16 miteinander verbunden sind. Durch ein Loch in der Mitte der Tragplatte 16 ist ein Zentrierzapfen 17 hindurchgeführt, mit dem eine genaue Positionierung der Schaltschränke 6a und 6b in Bezug auf die Formhälften möglich ist. Jeder der Schaltschränke 6a und 6b weist an seiner Unterseite eine automatische Multikupplung 10' auf, die in der Betriebsstellung mit passenden automatischen Multikupplungen 10 an den Formhälften 8 im Eingriff stehen bzw. gekuppelt sind. Derartige Multikupplungen sind für sich genommen aus dem Stand der Technik bekannt und brauchen daher an dieser Stelle nicht näher erläutert werden. Im Inneren der Schaltschränke 6a und 6b sind eine Reihe von Steuerungs- und Reglerkarten sowie weitere elektrische und elektronische Komponenten angeordnet.

Die Figur 5 zeigt eine abgewandelte Ausführungsform eines erfindungsgemäßen, mitdrehenden Schaltschranks 6 mit einer aufgeklappten Gehäusewand 18. Im Innern des Schaltschranks 6 sind mehrere Aufnahmevorrichtungen 19 (vorliegend sechs Stück) zur Aufnahme und Befestigung von Steuerungs- und Reglerkarten vorhanden. Beispielhaft können folgende Karten dort untergebracht werden:
- Temperaturreglerkarten (z.B. für Temperatursensoren und Heizelemente),
- Leistungselektronikkarten (z.B. für die Regelung und Steuerung der Heizung der Formhälften),
- Karten mit digitalen Ein-/Ausgängen
- Karten mit analogen Ein-/Ausgängen
- Karten mit Ladungsverstärker (z.B. für den Werkzeuginnendruck)

Neben einer automatischen Multikupplung 10' kann auch eine manuelle Multikupplung 20 vorgesehen sein. Des Weiteren sind Steuerungstransformatoren 21 vorhanden, beispielsweise geregelte und/oder ungeregelte Netzteile sowie Sicherungseinrichtungen 22, beispielsweise zum Absichern der Versorgungsspannungen. Die Versorgungsspannungen können Hochvolt-(400V, 230V) und Niedervolt(24V)-Spannungen sein. Es kann sich um Gleichspannung (DC) oder Wechselspannung (AC) handeln. Schematisch ist der elektrische Drehverteiler 12 angedeutet, der ebenfalls eine automatische oder manuelle Multikupplung 23 aufweisen kann. Der elektrische Drehverteiler dient zur Übertragung von bzw. Versorgung mit beispielsweise: elektrischer Leistungsversorgung, unterschiedliche Bus-Schnittstellen, sicherheitsrelevante Signale. Über die Multikupplung 23 können die vorgenannten elektrischen Komponenten in den Drehverteiler eingespeist werden und soweit erforderlich herausgeführt werden. Letzteres gilt insbesondere zur Übertragung von Signalen und Daten zwischen dem Schaltschrank 6 und der zentralen Steuerungseinrichtung der Spritzgießmaschine. In der CPU bzw. der Datenverarbeitungseinrichtung der zentralen Steuerungseinrichtung kann eine weitere Verarbeitung der Daten erfolgen. Die CPU der zentralen Steuerungseinrichtung dient aber in erste Linie zum Verwalten der Steuerungs- und Reglerkarten in dem Schaltschrank 6. Der Schaltschrank 6 bildet somit ein mit der Wendeplatte bzw. dem drehbaren Formenträger mitrotierendes dezentrales Steuerungs- und Regelgerät für den Betrieb der an oder in den Formhälften vorgesehenen Sensoren und Aktoren. Die Verarbeitung der von den Sensoren ermittelten Signale erfolgt in dem mitdrehenden Schaltschrank und nicht wie üblich in der zentralen Steuerungseinrichtung der Spritzgießmaschine. In letzterer erfolgt jedoch weiterhin die Visualisierung der Prozessdaten sowie eine Eingabe von Soll- und Istwerten als Vorgaben für die Steuerungs- und Reglerkarten in dem Schaltschrank 6. Darüber hinaus erfolgt in der zentralen Steuerungseinrichtung die Eingabe weiterer Betriebsparameter für sonstige Teile der Spritzgießmaschine. Zwischen der zentralen Steuerungseinrichtung und dem dezentralen Schaltschrank erfolgt ein Datenaustausch. Beispielsweise kann in dem Schaltschrank 6 erfasst werden, ob und wann alle Kerne eines Kernzugsystems eingefahren sind, und diese Information kann über das Bussystem an die zentrale Steuerungseinrichtung weitergegeben werden. Die Verwaltung des dezentralen, mitrotierenden Steuerungs- und Regelgerät kann anstelle der zentralen Steuerungseinrichtung der Spritzgießmaschine auch von einem übergeordneten Steuerungssystem vorgenommen werden, an das zum Beispiel mehrere Spritzgießmaschinen angeschlossen sind. Dieses übergeordnete Steuerungssystem steht somit in einem Datenaustausch mit mehreren dezentralen Steuerungs- und Regelgeräten der hier beschriebenen Art.

Anhand der Figur 6 soll die Verbindung zwischen dem mitrotierenden dezentralen Steuer- und Regelgerät 6 an der Wendeplatte 2 und der zentralen Steuerungseinrichtung sowie einem zentralen Versorgungsschaltschrank erläutert werden. Die Figur 6 zeigt schematisch eine auf einem Boden B einer Fabrikhalle stehenden Spritzgießmaschine des in der DE102005016239A1 offenbarten Typs. Auf einem Maschinenbett 30 sind eine feststehende Formaufspannplatte 31, eine bewegliche Formaufspannplatte 32 sowie zwei Plastifizier- und Einspritzeinheiten 33 und 34 abgestützt. Zwischen den beiden äußeren Formaufspannplatten ist eine Wendeplatte 2 auf einem längsverschieblichen Drehteller 35 befestigt. Der besseren Übersicht halber sind die Säulen und die Traverse zwischen den oberen Säulen weggelassen. Auf der Wendeplatte 2 sind Formhälften 8 befestigt, die mit zugehörigen Formhälften 8' auf den äußeren Formaufspannplatten zusammengebracht werden können. Oberhalb der Wendeplatte 2 befinden sich der Schaltschrank 6 bzw. das dezentrale Steuerungs- und Regelgerät 6 sowie der Drehverteiler 12. Unter oder in dem Maschinenbett 30 ist ein zentraler Versorgungsschaltschrank 36 vorgesehen, der an eine Spannungsquelle V angeschlossen ist und von dem eine Versorgungsleitung 37 zu dem Drehverteiler 12 führt. Von dort gelangen die Versorgungsspannungen wie oben beschrieben in den Schaltschrank 6 und weiter zu den Verbrauchern in den Formhälften 8 und/oder an der Wendeplatte 2. Selbstverständlich sind weitere Versorgungsleitungen für sonstige Verbraucher wie zum Beispiel elektrische Antriebe oder elektrische Heizbänder der Plastifizier- und Einspritzeinrichtungen 34, 35 vorhanden. Mittels weiterer Leitungen 38 und 39 ist der Schaltschrank 6 bzw. sind die darin befindlichen Steuerungs- und Reglerkarten, mit einer zentralen Steuerungseinrichtung 40 verbunden. Diese umfasst eine Datenverarbeitungseinrichtung 41 mit wenigstens einem zentralen Prozessor (CPU) sowie ein Ein- und Ausgabegerät 42 mit einem Anzeigeteil 42a und einem Bedienteil 42b. Die Datenverarbeitungseinrichtung 41 kann mittels einer bidirektionalen Datenleitung 43 mit dem Ein- und Ausgabegerät 42 verbunden sein. Über die Leitung 39 werden beispielsweise Daten und Befehle an die Steuerungs- und Reglerkarten in dem Schaltschrank 6 übertragen. Über die Leitung 38 können in der entgegengesetzten Richtung Daten und Signale von den Steuerungs- und Reglerkarten an die zentrale Steuerungseinrichtung 40 übertragen werden. Selbstverständlich sind weitere Leitungen (z.B. 50, 51) vorhanden, die mit Sensoren und Aktoren verbunden sind, die im Betrieb nicht gedreht werden und somit nicht über den Drehverteiler 12 mit der zentralen Steuerungseinrichtung 40 verbunden sein müssen.

### Bezugszeichenliste

- 1a, 1b: Obere Säulen
- 2: Wendeplatte
- 3: Traverse
- 4: Zwischenstücke
- 5: Gleitbuchsen
- 6: Dezentraler Schaltschrank
- 6a: Vorderes Schaltschrankteil
- 6b: Hinteres Schaltschrankteil
- 7a, 7b: Linearantriebe für Schaltschrank
- 8, 8': Formhälften
- 9a, 9b: Linearantriebe für Traverse
- 10: Multikupplung an Formhälfte
- 10': Multikupplung an Schaltschrank
- 11: Gehäuse des Drehverteilers
- 11a: Unteres Gehäuseteil
- 11b: Oberes Gehäuseteil
- 12: Drehverteiler
- 13.1 - 13.7: Elektrische Anschlussstellen
- 14: Drehbarer Teil des Drehverteilers
- 15: Elektrische Anschlussstellen
- 16: Tragplatte
- 17: Zentrierzapfen
- 18: Gehäusewand
- 19: Aufnahmevorrichtungen für Steuerungs- und Regierkarten
- 20: Manuelle Multikupplung
- 21: Steuerungstransformatoren
- 22: Elektrische Sicherungseinrichtungen
- 23: Multikupplung
- 30: Maschinenbett
- 31: Feststehende Formaufspannplatte
- 32: Bewegliche Formaufspannplatte
- 33: Erste Plastifizier- und Einspritzeinheit
- 34: Zweite Plastifizier- und Einspritzeinheit
- 35: Drehteller
- 36: Zentraler Versorgungsschaltschrank
- 37: Versorgungsleitung
- 38: Erste Datenleitung
- 39: Zweite Datenleitung
- 40: Zentrale Steuerungseinrichtung
- 41: Datenverarbeitungseinrichtung
- 42: Ein- und Ausgabegerät
- 42a: Anzeigeteil
- 42b: Bedienteil
- 43: Bidirektionale Datenleitung
- 50, 51: Weitere Datenleitungen
- B: Boden
- V: Versorgungsspannungsquelle

## Patentansprüche

1. Spritzgießmaschine mit zwei äußeren Formaufspannplatten (31, 32) sowie mit wenigstens einem weiteren dazwischen angeordneten Formenträger (2), der um eine orthogonal zur Maschinenlängsachse liegenden Drehachse gedreht werden kann, wobei ein Drehverteiler (12) vorgesehen ist, dessen drehbares Teil koaxial zur Drehachse des Formenträgers (2) liegt und an dessen drehfestes Teil Leitungen (37, 38, 39) angeschlossen werden können, um den Formenträger (2) und/oder auf diesem anbringbare Formhälften (8) mit Medien zu versorgen, und wobei die Spritzgießmaschine eine zentrale Steuerungseinrichtung (40) aufweist,
**dadurch gekennzeichnet, dass**
ein mit dem Formenträger (2) und/oder mit den auf dem Formenträger (2) anbringbaren Formhälften (8) koppelbarer und beim Betrieb der Spritzgießmaschine mit dem Formenträger (2) mitdrehender Schaltschrank (6) vorgesehen ist, in dem Steuerungs- und Reglerkarten (19) zur Verarbeitung von Signalen von Sensoren und/oder Aktoren sowie zur Abgabe von Signalen an die Sensoren und/oder die Aktoren vorgesehen sind, und dass wenigstens eine Busverbindung (38, 39) von dem mitdrehendem Schaltschrank (6) zu der zentralen Steuerungseinrichtung (40) der Spritzgießmaschine vorgesehen ist, über den ein Datenaustausch zwischen der zentralen Steuerungseinrichtung (40) der Spritzgießmaschine und den Steuerungs- und Reglerkarten (19) in dem mitdrehendem Schaltschrank (6) vorgesehen ist.

2. Spritzgießmaschine nach Anspruch 1,
**dadurch gekennzeichnet, dass**
in dem mitdrehenden Schaltschrank (6) Ein- und Ausgabekarten für digitale und/oder analoge Ein-/Ausgänge vorgesehen sind.

3. Spritzgießmaschine nach Anspruch 1 oder 2,
**dadurch gekennzeichnet, dass**
in dem mitdrehenden Schaltschrank (6) elektrische Stellelemente zur Betätigung von Ventilen oder dergleichen vorgesehen sind.

4. Spritzgießmaschine nach einem der Ansprüche 1 bis 3,
**dadurch gekennzeichnet, dass**
in dem mitdrehenden Schaltschrank (6) geregelte und/oder ungeregelte Netzteile (21) und/oder Absicherungen (22) für Versorgungs- und Signalspannungen vorgesehen sind.

5. Spritzgießmaschine nach einem der Ansprüche 1 bis 4,
**dadurch gekennzeichnet, dass**
der mitdrehende Schaltschrank (6) eine manuelle (20) und/oder automatische (10') Multikupplung mit einer Mehrzahl von Kupplungsschnittstellen aufweist, und dass an dem Formenträger (2) und/oder an den auf dem Formenträger (2) befestigten Formhälften (8) solche Kupplungsschnittstellen vorgesehen sind, die im Eingriff mit den Kupplungsstellen der Multikupplung an dem Schaltschrank gebracht werden können.

6. Spritzgießmaschine nach einem der Ansprüche 1 bis 5,
**dadurch gekennzeichnet, dass**
ein separater, zentraler Versorgungsschaltschrank (36) vorgesehen ist, in dem die von einer Spannungsquelle (V) zur Verfügung gestellte elektrische Leistung aufbereitet und über eine oder mehrere Versorgungsleitungen (37) zu dem Drehverteiler (12) geführt wird.

7. Spritzgießmaschine nach einem der Ansprüche 1 bis 6,
**dadurch gekennzeichnet, dass**
die Busverbindung (38, 39) zwischen dem mitdrehenden Schaltschrank (6) und der zentralen Steuerungseinrichtung (40) mittels Schleifring über den Drehverteiler (12) oder kabellos, beispielsweise über Funk oder Blootooth, ausgebildet ist.

8. Spritzgießmaschine nach einem der Ansprüche 1 bis 7,
**dadurch gekennzeichnet, dass**
die Versorgungsspannungen über Hochleistungsschleifringe des Drehverteilers (12) in den mitdrehenden Schaltschrank (6) geführt werden und dass von dort eine Unterverteilung an die Verbraucher in den Formhälften und/oder auf dem Formträger vorgesehen ist.

9. Spritzgießmaschine nach einem der Ansprüche 1 bis 8,
**dadurch gekennzeichnet, dass**
ein oder mehrere Linearantriebe (7a, 7b) vorgesehen sind, mit denen der Schaltschrank (6) auf den mittleren Formträger (2) zu und von diesem weg verfahren werden kann.

10. Spritzgießmaschine nach einem der Ansprüche 1 bis 9,
**dadurch gekennzeichnet, dass**
mehrere drehbare Formenträger (2) zwischen den äußeren Formaufspannplatten (31, 32) vorgesehen sind und dass für jeden drehbaren Formenträger (2) ein mitdrehender Schaltschrank (6) und ein Drehverteiler (12) vorgesehen sind, und dass die zentrale Steuerungseinrichtung (40) mit den Schaltschränken (6) über eine oder mehrere Busverbindungen verbunden ist.

## Claims

1. An injection moulding machine comprising two outer die platens (31, 32) and at least one further mould carrier (2) which is arranged therebetween and can be rotated about a rotational axis located perpendicularly to the longitudinal machine axis, wherein a rotary distributor (12) is provided, the rotatable part of which is located coaxially with respect to the rotational axis of the mould carrier (2) and to the rotatably fixed part of which lines (37, 38, 39) can be connected for the purpose of supplying the mould carrier (2) and/or mould halves (8) that can be attached thereto with media, and wherein the injection moulding machine comprises a central control unit (40),
**characterized in that**
a control console (6), which can be coupled to the mould carrier (2) and/or to the mould halves (8) that can be attached to the mould carrier (2) and which rotates along with the mould carrier (2) during the operation of the injection moulding machine, is provided, in which control boards (19) are provided for processing signals from sensors and/or actuators and for sending signals to the sensors and/or the actuators, and **in that** at least one bus connection (38, 39) from the co-rotating control console (6) to the central control unit (40) of the injection moulding machine is provided, via which a data exchange is provided between the central control unit (40) of the injection moulding machine and the control boards (19) in the co-rotating control console (6).

2. The injection moulding machine according to claim 1,
**characterized in that**
input and output boards for digital and/or analog inputs/outputs are provided in the co-rotating control console (6).

3. The injection moulding machine according to claim 1 or 2,
**characterized in that**
electric actuators for actuating valves or the like are provided in the co-rotating control console (6).

4. The injection moulding machine according to one of claims 1 to 3,
**characterized in that**
controlled and/or uncontrolled power packs (21) and/or fuse protections (22) for supply and signal voltages are provided in the co-rotating control console (6).

5. The injection moulding machine according to one of claims 1 to 4,
**characterized in that**
the co-rotating control console (6) has a manual (20) and/or automatic (10') multicoupling having a plurality of coupling interfaces, and **in that** on the mould carrier (2) and/or on the mould halves (8) attached to the mould carrier (2), such coupling interfaces are provided that can be brought into engagement with the coupling points of the multicoupling on the control console.

6. The injection moulding machine according to one of claims 1 to 5,
**characterized in that**
a separate, central supply control console (36) is provided, in which the electric power supplied by a voltage source (V) is prepared and is directed via one or more supply lines (37) to the rotary distributor (12).

7. The injection moulding machine according to one of claims 1 to 6,
**characterized in that**
the bus connection (38, 39) between the co-rotating control console (6) and the central control unit (40) is formed by means of a slip ring via the rotary distributor (12) or wirelessly, for example, via radio or Bluetooth.

8. The injection moulding machine according to one of claims 1 to 7,
**characterized in that**
the supply voltages are directed via high-performance slip rings of the rotary distributor (12) into the co-rotating control console (6), and that from there a sub-distribution is provided to the consumers in the mould halves and/or on the mould carrier.

9. The injection moulding machine according to one of claims 1 to 8,
**characterized in that**
one of more linear drives (7a, 7b) are provided, with which the control console (6) can be moved toward and away from the central mould carrier (2).

10. The injection moulding machine according to one of claims 1 to 9,
**characterized in that**
a plurality of rotatable mould carriers (2) are provided between the outer die platens (31, 32), and **in that** for each rotatable mould carrier (2) a co-rotating control console (6) and a rotary distributor (12) are provided, and **in that** the central control unit (40) is connected to the control consoles (6) via one or more bus connections.

## Revendications

1. Machine de moulage par injection comprenant deux plaques de serrage de moule extérieures (31, 32) ainsi qu'au moins un support de moule (2) supplémentaire disposé entre elles, qui peut être tourné sur un pivot placé orthogonalement par rapport à l'axe longitudinal de la machine, sachant qu'un distributeur rotatif (12) est prévu, dont la partie rotative est coaxiale au pivot du support de moule (2) et sur la partie fixe duquel des lignes (37, 38, 39) peuvent être raccordées, pour alimenter en fluide le support de moule (2) et/ou des moitiés de moule (8) pouvant être placées sur celui-ci, et sachant que la machine de moulage par injection présente un dispositif de commande central (40),
**caractérisée en ce**
**qu'**une armoire électrique (6) pouvant être couplée au support de moule (2) et/ou aux moitiés de moule (8) pouvant être placées sur le support de moule (2), et tournant conjointement avec le support de moule (2) quand la machine de moulage par injection fonctionne est prévue, dans laquelle des cartes de commande et de régulateur (19) pour traiter des signaux de capteurs et/ou d'actionneurs ainsi que pour émettre des signaux aux capteurs et/ou aux actionneurs sont prévues, et en ce qu'au moins une liaison par bus (38, 39) de l'armoire électrique (6) tournant conjointement au dispositif de commande central (40) de la machine de moulage par injection est prévue, par laquelle un échange de données entre le dispositif de commande central (40) de la machine de moulage par injection et les cartes de commande et de régulateur (19) dans l'armoire électrique (6) tournant conjointement est prévu.

2. Machine de moulage par injection selon la revendication 1,
**caractérisée en ce que**
des cartes d'entrée et de sortie pour des entrées/sorties numériques et/ou analogiques sont prévues dans l'armoire électrique (6) tournant conjointement.

3. Machine de moulage par injection selon la revendication 1 ou 2,
**caractérisée en ce que**
des éléments de réglage électriques pour actionner des ventilateurs ou similaire sont prévus dans l'armoire électrique (6) tournant conjointement.

4. Machine de moulage par injection selon l'une des revendications 1 à 3,
**caractérisée en ce que**
des blocs d'alimentation (21) et/ou des protections par fusibles (22) réglé(e)s et/ou non réglé(e)s pour des tensions d'alimentation et de signal sont prévu(e)s dans l'armoire électrique (6) tournant conjointement.

5. Machine de moulage par injection selon l'une des revendications 1 à 4,
**caractérisée en ce que**
l'armoire électrique (6) tournant conjointement présente un multi-couplage manuel (20) et/ou automatique (10') comprenant une pluralité d'interfaces de couplage, et que de telles interfaces de couplage sont prévues sur le support de moule (2) et/ou sur les moitiés de moule (8) fixées sur le support de moule (2), qui peuvent être mises en prise avec les points de couplage du multicouplage sur l'armoire électrique.

6. Machine de moulage par injection selon l'une des revendications 1 à 5,
**caractérisée en ce**
**qu'**une armoire électrique d'alimentation (36) centrale séparée est prévue, dans laquelle la puissance électrique mise à disposition par une source de tension (V) est préparée et amenée au distributeur rotatif (12) via une ou plusieurs ligne(s) d'alimentation (37).

7. Machine de moulage par injection selon l'une des revendications 1 à 6,
**caractérisée en ce que**
la liaison par bus (38, 39) entre l'armoire électrique (6) tournant conjointement et le dispositif de commande central (40) est formée au moyen d'une bague collectrice via le distributeur rotatif (12) ou sans fil, par exemple par radio ou bluetooth.

8. Machine de moulage par injection selon l'une des revendications 1 à 7,
**caractérisée en ce que**
les tensions d'alimentation sont dirigées dans l'armoire électrique (6) tournant conjointement via des bagues collectrices haute puissance du distributeur rotatif (12) et que depuis celle-ci, une distribution secondaire sur les utilisateurs dans les moitiés de moule et/ou sur le support de moule est prévue.

9. Machine de moulage par injection selon l'une des revendications 1 à 8,
**caractérisée en ce**
**qu'**un ou plusieurs entraînement (s) linéaire(s) (7a, 7b) est/sont prévu(s), avec lequel/lesquels l'armoire électrique (6) peut être amenée vers le support de moule central (2) et éloignée de celui-ci.

10. Machine de moulage par injection selon l'une des revendications 1 à 9,
**caractérisée en ce que**
plusieurs supports de moule (2) rotatifs sont prévus entre les plaques de serrage de moule extérieures (31, 32) et qu'une armoire électrique (6) tournant conjointement et un distributeur rotatif (12) sont prévus pour chaque support de moule (2) rotatif, et que le dispositif de commande central (40) est relié aux armoires électriques (6) via une ou plusieurs liaison(s) par bus.
